# EUROPEAN PATENT APPLICATION

(11) **EP 2 495 972 A1**
(43) Date of publication of application: **05.09.2012**
(21) Application number: 11156986.9
(22) Date of filing: 04.03.2011
(51) Int. Cl.: H04N 7/24, H04N 5/225, H04N 7/18

(54) **Monitoring device and method for monitoring a location**

(71) Applicant: Axis AB, 223 69 Lund (SE)
(72) Inventor: Kannermark, Per, 21228 Malmö (SE); Nilsson, Andreas, 261 72 Häljarp (SE)
(74) Representative: Johansson, Magnus

(57) **Abstract**

The present invention relates to a monitoring device for generating a first and a second image stream of subsequent video frames. The monitoring device comprises an image sensor unit (16) arranged to capture images and to output an image sensor signal, and a signal processing unit (20, 20') arranged to receive and process the image sensor signal, wherein the monitoring device is arranged, by means of the image signal processing unit (20, 20'), to process the image sensor signal twice in order to generate the first and the second image streams of subsequent video frames. The present invention further relates to a method for monitoring a location, comprising the acts: capturing an image sensor signal, generating a first image stream of subsequent video frames by processing the image sensor signal a first time, and generating a second image stream of subsequent video frames by processing the image sensor signal a second time.

## Description

### FIELD OF THE INVENTION

The present invention relates to a monitoring device for generating a first and a second image stream of subsequent video frames. Moreover the present invention relates to a method for monitoring a location comprising the steps of generating a first and a second image stream of subsequent video frames.

### BACKGROUND OF THE INVENTION

Monitoring devices especially surveillance cameras are today widely used for monitoring of different premises. One type of surveillance camera is a digital surveillance camera being arranged to capture digital images and to send the images over a network e.g. the internet. Such a digital surveillance camera is typically set up to operate in the following manner. The camera's components (comprising a lens and an image sensor) capture images, which can be described as light of different wavelengths, and transforms them into electrical signals. These signals are then converted from analog to digital format. Thereafter the digital format signals are being subjected to digital image processing before being sent over the network.

The digital image processing is normally divided into three steps a) image signal processing (generally image quality enhancing processing such as reduce the noise level, adjust the contrast, sharpening the images, convert the color space of the images etc) b) scaling (i.e. scaling to a specific image format, e.g. 16:9) and c) encoding (using e.g. JPEG or H.264/MPEG).

The image signal processing in step a) is performed differently depending on the specific implementation and/or conditions at the monitored site. When setting up the image signal processing inside the surveillance camera many choices in how to process the raw digital format signals from the image sensor has to be made. In some cases the choice on how to perform the processing is not the best for a given situation or scene. For instance, the contrast of the resulting image may be too low to actually identify a person, but a higher contrast setting would sacrifice details in shadows and/or highlights. By increasing the contrast the persons face may be distinguishable but whatever happened in the shadows are lost and cannot be retrieved even when post-processing recorded images. Another example appears when monitoring a dusk site, e.g. when monitoring a gas station during dark hours. During such dusk conditions it is hard to distinguish details using normal exposure times (i.e. exposure times in the order of tenths of a second), e.g. in order to be able to read a license plate on a car standing still during low light conditions. However, if a longer exposure time is used, movement of an object may not be captured without the images being blurry.

A solution to the two above mentioned scenarios, and also to other scenarios wherein the choice on how to perform the processing is difficult to make depending on the conditions for a given situation or scene is to use two or more cameras, the different cameras having different set-ups.

However, such a known solution is costly and troublesome to use.

### SUMMARY OF THE INVENTION

In view of the above, an objective of the invention is to solve or at least reduce one or several of the drawbacks discussed above. Generally, the above objective is achieved by the attached independent claims.

In particular, according to a first aspect of the invention, a monitoring device for generating a first and a second image stream of subsequent video frames is provided. The monitoring device comprises an image sensor unit arranged to capture images and to output an image sensor signal and a signal processing unit arranged to receive and process the image sensor signal. The monitoring device is arranged, by means of the image signal processing unit, to process the image sensor signal twice in order to generate the first and the second image streams of subsequent video frames.

This is advantageous in that the present invention enables the image signal processing unit to process the same image sensor signal into video frames of at least two image streams of subsequent video frames. Accordingly, the image sensor signal is processed according to a first processing scheme in order to create a first image stream of subsequent video frames and the same image sensor signal is processed ones again, this time according to a second processing scheme, in order to create a second image stream of subsequent video frames. The first processing scheme is optimised for a first application and the second processing scheme is optimised for a second application.

In connection with the first example mentioned above in the background section this invention simply let the monitoring device, e.g. a surveillance camera, process the image sensor signal (raw data from the image sensor) at least twice, with different optimizations, to allow for recording and viewing of at least two different image streams. This way the management software can for instance record both the "normal" and the contrast enhanced images in the first example in the background section above, which means that all information needed to identify the person and see what was going on in the shadows will be available.

The contrast example above is just one way of using this invention. There are many different ways of processing an image so that the result would be interesting to use in this type of application. To mention a few non-limiting examples:
Generating a first image stream of video frames wherein each frame is based on information collected during a set integration time, i.e. a single image and generating a second image stream of video frames wherein each frame is based temporally summed images, this in order to mimic short and long exposures at the same time.
Generating a first image stream of video frames by processing the image sensor signal using a first noise filter and generating a first image stream of video frames by processing the same image sensor signal using a second noise filter. This may e.g. be used when optimizing the image streams to be transmitted through channels having different bandwidths.

More examples of possible and non-limiting examples of implementations may be found in the detailed description below.

According to one embodiment of the present invention the image signal processing unit processing the image sensor signal in order to generate the first image stream of subsequent video frames may be set in a first mode and the image signal processing unit processing the image sensor signal in order to generate the second image stream of subsequent video frames may be set in a second mode, the second mode being different than the first mode.

According to another embodiment of the present invention the monitoring device may comprise two separate signal processing units, wherein the first signal processing unit is arranged to process the image sensor signal in order to generate the first image stream of subsequent video frames and the second signal processing units is arranged to process the same image sensor signal as the first signal processing units in order to generate the second image stream of subsequent video frames. This enables parallel processing in order to generate the first and second image streams of subsequent video frames.

According to yet another embodiment of the present invention the monitoring device may comprise a single signal processing unit, wherein the single signal processing units is arranged to process the image sensor signal twice in order to generate the first and the second image streams of subsequent video frames. This enables an effective solution for generating the first and second image streams of subsequent video frames since only one signal processing unit need to be implemented.

According to another embodiment of the present invention the image signal processing unit processing the image sensor signal in order to generate the first image stream of subsequent video frames may be arranged to process the image sensor signal using a non-linear transfer function and the image signal processing unit processing the image sensor signal in order to generate the second image stream of subsequent video frames may be arranged to process the image sensor signal using a linear transfer function.

According to yet another embodiment of the present invention the image signal processing unit may be arranged to generate the first image stream of subsequent video frames as video frames based on image sensor signal collected during a first time period and the image signal processing unit may be arranged to generate the second image stream of subsequent video frames as video frames based on image sensor signal collected during a second time period, wherein the second time period is longer than the first time period.

According to another embodiment of the present invention the image signal processing unit processing the image sensor signal in order to generate the first image stream of subsequent video frames may be arranged to process the image sensor signal using a first noise reduction level and the image signal processing unit processing the image sensor signal in order to generate the second image stream of subsequent video frames may be arranged to process the image sensor signal using a second noise reduction level, wherein the second noise reduction level is different than the first noise reduction level.

According to yet another embodiment of the present invention the image signal processing unit processing the image sensor signal in order to generate the first image stream of subsequent video frames may be arranged to process the image sensor signal using a first contrast setting and the image signal processing unit processing the image sensor signal in order to generate the second image stream of subsequent video frames may be arranged to process the image sensor signal using a second contrast setting.

According to another embodiment of the present invention the image signal processing unit processing the image sensor signal in order to generate the first image stream of subsequent video frames may be arranged to process the image sensor signal using a first gamma correction and the image signal processing unit processing the image sensor signal in order to generate the second image stream of subsequent video frames may be arranged to process the image sensor signal using a second gamma correction.

According to yet another embodiment of the present invention the image signal processing unit processing the image sensor signal in order to generate the first image stream of subsequent video frames may be arranged to process the image sensor signal using a first color space conversion and the image signal processing unit processing the image sensor signal in order to generate the second image stream of subsequent video frames may be arranged to process the image sensor signal using a second color space conversion.

According to a second aspect of the invention a method for generating a first and a second image stream of subsequent video frames is provided. The method comprises: capturing an image sensor signal, generating a first image stream of subsequent video frames by processing the image sensor signal a first time, and generating a second image stream of subsequent video frames by processing the image sensor signal a second time.

Generating the first image stream of subsequent video frames by processing the image sensor signal a first time and generating the second image stream of subsequent video frames by processing the image sensor signal a second time may be performed in a single processing unit being an image signal processing unit.

Generating the first image stream of subsequent video frames by processing the image sensor signal a first time may be performed in a first image signal processing unit and generating the second image stream of subsequent video frames by processing the image sensor signal a second time may be performed in a second image signal processing unit.

Processing the image sensor signal the second time may be made differently than processing the image sensor signal the first time.

The acts of the capturing an image sensor signal, generating a first image stream of subsequent video frames by processing the image sensor signal a first time and generating a second image stream of subsequent video frames by processing the image sensor signal a second time may be performed in a single monitoring device.

The method may further comprise displaying or storing said first and second image streams of subsequent video frames.

### BRIEF DESCRIPTION OF THE DRAWINGS

This and other aspects of the present invention will now be described in more detail, with reference to appended drawings showing embodiments of the invention. The figures should not be considered limiting the invention to the specific embodiment; instead they are used for explaining and understanding the invention. Like numbers refer to like elements throughout the figures.
Figure 1 is a schematic view of a monitoring device according to an embodiment of the invention.
Figure 2 is a schematic view of an image signal processing unit from the monitoring device depicted in Figure 1.
Figure 3 is a schematic view of a monitoring device according to another embodiment of the invention.

### DETAILED DESCRIPTION

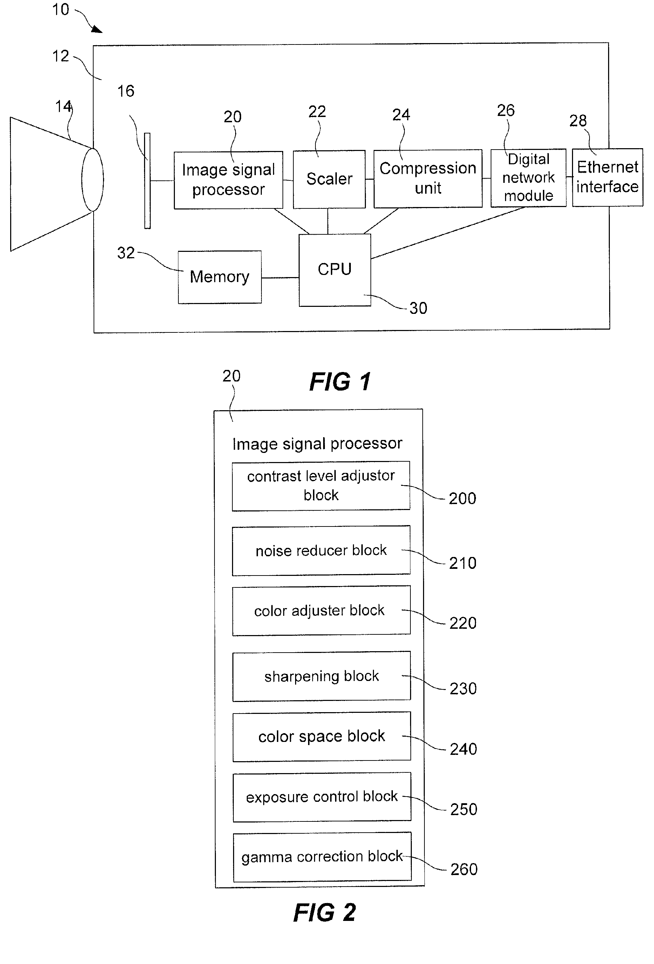

Figure 1 illustrates a monitoring device 10 according to an embodiment of the present invention. The monitoring device 10 comprises a housing 12, a lens 14, an image sensor unit 16, an image signal processing unit 20, a scaler 22, a compression unit 24, a digital network module 26, an Ethernet interface 28, a CPU 30 and a memory 32.

The monitoring device 10 is arranged to be connected to a digital network such as the Internet or a Local Area Network (LAN) via the Ethernet interface 28. The connection to the digital network may be wired or wireless. Thus, the Ethernet interface 28 may be a network port adapted to 10/100/1000 Mbps data traffic, such as an Ethernet port, a modular port being arranged to receive a modular connector, e.g. a RJ45 connector. Normally such a RJ45 connector port is arranged to receive a network cable, such as a twisted pair cable (e.g. of cat 5, cat 5e or cat 6). Alternatively the I/O means may be a wireless I/O means using mobile internet standards (i.e. 1 G, 2G, 2.5G, 2.75G, 3G, 3.5G, 3.75G, 3.9G, 4G) or using WiFi.

The camera components, i.e. the lens 14 and the image sensor unit 16, of the monitoring device 10 is arranged to capture images, each which can be described as light of different wavelengths and originating from different object and parts of objects, and to transform the images into electrical signals. These signals are then converted from analog to digital format and transferred into the image signal processing unit 20 the scaler 22, the compression unit 24 and the digital network module 26 before they are being sent out over the network.

The lens 14 focuses the images onto the image sensor unit 16. The image sensor unit 16 comprises an image sensor for instance a CCD, CMOS or any other kind of Focal Plane Arrays, such as an IR or thermal imager sensor. The image sensor is arranged to convert the image into an analog electric signal. The image sensor unit 16 further comprises an Analog to Digital (A/D) converter. The A/D converter is arranged to convert the analog electrical signal into a digital electrical signal. Thus, the images being focused onto the image sensor are converted into analog electrical signals and thereafter converted by means of the A/D converter into a digital image signal. This digital image signal may be called a raw digital image signal. The term raw is used due to that the image signal is not yet processed and therefore is not ready to be used in order to produce viewable images or video frames. However, throughout this description the digital image signal being output from the image sensor unit 16 will be termed image sensor signal. This due to that it is the signal being output from the image sensor unit 16. The image sensor signal output from the image sensor unit 16 is forwarded to the image signal processing unit 20 for processing. The image sensor signal does not necessarily need to be in its very rawest from. For instance fix pattern noise may have been removed before the image sensor signal is forwarded to the image signal processing unit 20.

According to the present invention the image signal processing unit 20 is arranged to process the same image sensor signal into video frames of at least two image streams of subsequent video frames. Accordingly, the image sensor signal is processed according to a first processing scheme in order to create a first image stream of subsequent video frames and the same image sensor signal is processed ones again, this time according to a second processing scheme, in order to create a second image stream of subsequent video frames. The first processing scheme is optimised for a first application and the second processing scheme is optimised for a second application.

One example may be extracting a first subset of the information of the image sensor signal to be used in the first image stream and a second subset of the information of the image sensor signal to be used in the second image stream (said first and second subsets of information contained in the image sensor signal may or may not overlap). It is however more likely that the processing is optimised for instance to visualise the image in a certain way. The process creating the first image stream is optimised for a certain application and the process creating for the second image stream is optimized for another application (or not at all). Rather than only extracting certain information, the image information may also, or instead, be amplified and/or modified.

The image signal processing unit 20 of figure 1 is depicted in more detail in Figure 2. The image signal processing unit 20 may comprise various processing blocks such as: a contrast adjuster block 200; a noise reducer block 210; a color adjuster block 220; a sharpening means block 230; a color space means block 240; an exposure control block 250 and a gamma correction block 260. It is not necessary for the image processing unit to include all these processing blocks. It is even possible for an implementation to include any combination of them, from a single one of the processing blocks to any number of processing blocks combined. Moreover, according an embodiment of the present invention the image signal processing unit 20 may comprise more than one processing block 200, 210, 220, 230, 240, 250, 260 of the same type. By comprising more than one processing block 200, 210, 220, 230, 240, 250, 260 of the same type the image signal processing unit 20 may be arranged to simultaneously process the same image sensor signal at least twice using a different setting for the parameter being processed by that type of processing block 200, 210, 220, 230, 240, 250, 260. As a non-limiting example, the image signal processing unit 20 may comprise two contrast adjuster blocks 200 and thus being arranged to concurrently process the same image sensor signal twice in order to generate two image streams of subsequent video frames using a different contrast setting for each one of the two image streams of subsequent video frames. The skilled person realizes that the same may be implemented for any other type of processing block 200, 210, 220, 230, 240, 250, 260 of the image signal processing unit 20. Further, the image signal processing unit 20 may include additional processing blocks not described herein. The processing blocks of the image signal processing unit 20 may be implemented as software code run by the image signal processing unit 20, as hardware implemented in the image signal processing unit 20 or as a combination thereof.

The contrast adjuster block 200, if included in the image signal processing unit 20, is arranged to adjust the contrast of a video frame. By using different contrast various details in an image frame may be enhanced. For instance, the contrast of an image frame may be too low to actually identify a person, but a different contrast setting would sacrifice details in shadows and/or highlights. By changing the contrast the persons face may be distinguishable but whatever happened in the shadows are lost and cannot be retrieved even when post-processing recorded video frames.

The noise reducer block 210, if included in the image signal processing unit 20, is arranged to reduce image noise, either spatial image noise, temporal image noise, or both. Video frames taken with the monitoring device 10 will pick up noise from a variety of sources. Many further uses of these video frames require that the noise will be at least partially removed. The reason may e.g. be aesthetic, a nicer video frames to look at, or practical, need when displaying the video frames on e.g. a computer screen or using noise reduction in order to reduce the quantity of data for the video frames.

The color adjuster block 220, if included in the image signal processing unit 20, is arranged to adjust the color of a video frame. The color adjuster 220 may for example adjust the white balance a video frame.

The sharpening means block 230, if included in the image signal processing unit 20, is arranged to provide sharpening to a video frame. An example is to use unsharp masking. By varying the degree of sharpening various details in the video frames may be enhanced. Moreover, by varying the degree of sharpening the quantity of data for the video frames may be varied.

The color space means block 240, if included in the image signal processing unit 20, is arranged to map the color space of a video frame. None limiting examples of color space mappings being possible to implement by the color space means 240 are PAL, NTSC, SECAM, Adobe RGB, ProPhoto RGB, s-RBG, YPbPr, YCbCr, etc.

The exposure control block 250, if included in the image signal processing unit 20, is arranged to emulate different exposure times. Generally the image sensor signal comprises images with a certain exposure time. The exposure time may be static or dynamic, depending on camera settings and changes in the scene. The image streams, being the result of the processing, comprise a row of frames that may have an emulated exposure time. This emulation is done according to the following: The images in the image sensor signal have a certain exposure time. Different exposure times for the image frames of the first and second image stream are emulated by taking the average of a first consecutive number of images from the image sensor signal and generating a frame of the first image stream, and by taking the average of a second consecutive number of images from the image sensor signal and generating a frame of the second image stream.

Hence with the average of a certain number of image sensor signal images one can create an image stream of subsequent video frames where the frames have a longer emulated exposure time than the exposure time of the original image sensor signal image. Practically this may be implemented in software, hardware or a combination of both. The number of images included in the average may be dynamic or static within an image stream of subsequent video frames.

Accordingly, in order to emulate different exposure times the video frames of the first image stream of subsequent video frames may be generated by collecting image sensor signal during a first time period and the video frames of the second image stream of subsequent video frames may be generated by collecting image sensor signal during a second time period, wherein the second time period is longer than the first time period.

Accordning to the above, the emulation of a certain exposure time is done by averageing a certain number of images from the image sensor signal. Both the first and the second image stream may use the concept of emulated exposure time by averaging a number of image from the image sensor signal.

By using different exposure time periods various kind of information may be recorded by the two images streams of subsequent video frames. For example by using the averaging technique described above enough information may collected in order to read a license plate on a car standing still during e.g. low light conditions (for example when monitoring a petrol station during night). On the contrary by, by just including each actually captured image as a new frame in the image stream of video frames it would be possible to monitor the movement of an object.

The gamma correction means block 260, if included in the image signal processing unit 20, is arranged to code luminance or tristimulus values of the video frames. Different gamma correction needs to be used depending on the display system onto which the video frames shall be displayed.

According to one embodiment of the present invention the image signal processing unit 20 is an application specific signal processor in case of a hardware solution or an application specific DSP in case of a software solution.
According to one embodiment the processing blocks may be arranged as software code portions stored in the monitoring device and adapted to process the sensor image data when executed in one or more processing units within the monitoring device.

According to the present invention the image signal processing unit 20 is arranged to generate at least two image streams of subsequent video frames, wherein the at least two image streams of subsequent video frames are generated using the same sensor image signal. Thus, the image signal processing unit 20 is arranged to process the image sensor signal at least twice in order to generate a first and a second image stream of subsequent video frames.

When processing the image sensor signal in order to generate the first image stream of subsequent video frames the image signal processing unit 20 is set in a first mode. When processing the image sensor signal in order to generate the second image stream of subsequent video frames the image signal processing unit 20 is set in a second mode.

The processing of the image sensor signal in order to generate the first and second image streams of subsequent video frames using said first and second mode may be performed concurrently by using an image signal processing unit 20 comprising more than one processing block 200, 210, 220, 230, 240, 250, 260 of the same type, as explained above. Thus, according to this embodiment the processing of the image sensor signal in order to generate the first and second image streams of subsequent video frames using said first and second mode is performed in parallel. Alternatively, the processing of the image sensor signal in order to generate the first and second image streams of subsequent video using said first and second mode may be performed serially, i.e. the image sensor signal is first processed ones using the first mode in order to generate at least a part of the first image stream of subsequent video frames and the same image sensor signal is subsequently processed using the second mode in order to generate at least a part of the second image stream of subsequent video frames. Thus, according to this embodiment the processing of the image sensor signal in order to generate the first and second image streams of subsequent video frames using said first and second mode is performed serially.

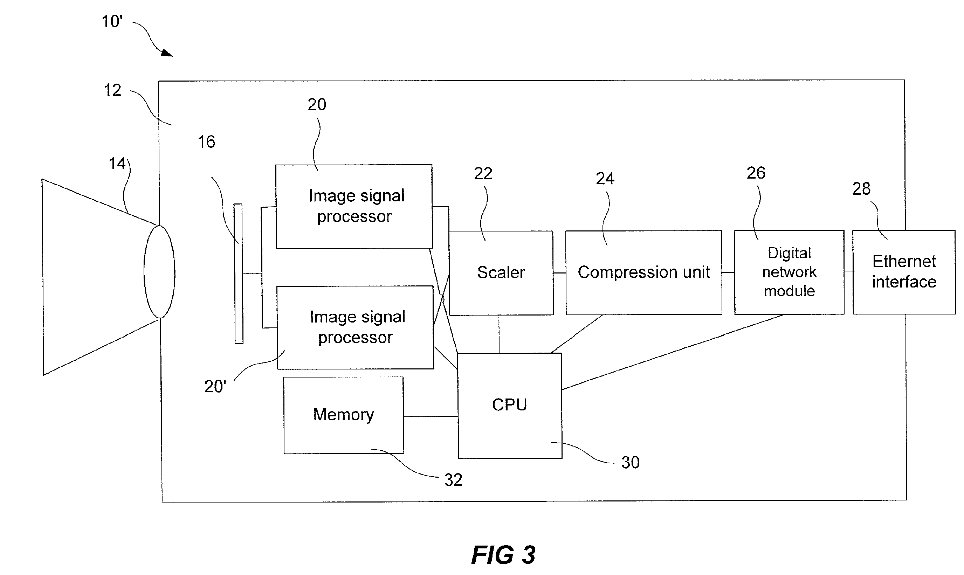

According to yet another embodiment the monitoring device may comprise more than one image signal processing unit 20. Using this embodiment the processing of the same image sensor signal in order to generate the first and second image streams of subsequent video frames using said first and second mode may be performed in parallel. An example of a monitoring device according to this embodiment is schematically shown in figure 3, wherein a similar monitor device 10' as the one depicted in figure 1 is shown. The difference between this embodiment and the embodiment of figure 1 is that the monitoring device 10' of figure 3 comprises two image signal processing units 20, 20' being able to simultaneously process the same image sensor signal in order to generate a first and a second image stream of subsequent video frames.

Accordingly, the present invention enables concurrent generation of at least two image streams of subsequent video frames using a single monitoring device, wherein the image streams of subsequent video frames may be optimized differently.

Below some non-limiting examples of embodiments of the present invention highlighting various non-limiting fields of use of concurrent generation of at least two image streams of subsequent video frames using a single monitoring device are described.

According to an embodiment of the present invention an image signal processing unit 20, 20' of the monitoring device 10, 10' is set to process the image sensor signal using a non-linear transfer function in order to generate the first image streams of subsequent video frames. A gamma correction processing is for example non-linear. Furthermore, a signal processing unit 20, 20' of the monitoring device 10, 10' is set to process the same image sensor signal using only linear transfer function in order to generate the second image stream of subsequent video frames. Thus, a signal processing unit 20, 20', being set in the first mode, is set to perform a non-linear transfer function on the sensor image signal, whereas a signal processing unit 20, 20', being set in the second mode, is set to perform a linear transfer function on the sensor image signal. When generating an image stream of subsequent video frames being optimized for being displayed, e.g. on a screen, normally at least one non-linear transfer function is needed to be performed on the sensor image signal. However, when generating an image stream of subsequent video frames being optimized for e.g. face recognition preferably no non-linear transfer function should be performed on the image sensor signal when generating the image stream of subsequent video frames. Thus, according to this embodiment of the invention both an image stream of subsequent video frames being optimized for being displayed and an image stream of subsequent video frames being optimized for being used for e.g. face recognition may be generated depicting the same scene. Accordingly, one image stream of subsequent video frames may be used for viewing and the other image stream of subsequent video frames may be used to e.g. run a face recognition algorithm on, the both image streams of subsequent video frames depicting the same scene.

According to another embodiment of the present invention a signal processing unit 20, 20' of the monitoring device 10, 10' is set to process the image sensor signal using a first noise reduction level in order to generate a first image stream of subsequent video frames. Furthermore, a signal processing unit 20, 20' of the monitoring device 10, 10' is set to process the same image sensor signal using a second noise reduction level in order to generate a second image stream of subsequent video frames. The second noise reduction level is different than the first noise reduction level. By producing two image streams of subsequent video frames using different level of noise reduction in order to generate each image stream of subsequent video frames the quantity of data for the image streams of subsequent video frames may be optimized for different purposes. E.g. a low or normal level of noise reduction may be applied when generating the first image stream of subsequent video frames whereas a high level of noise reduction may be applied when generating the second image stream of subsequent video frames. Accordingly, the first image stream of subsequent video frames may be optimized for normal applications whereas the second image stream of subsequent video frames may be optimized for applications needing e.g. low bandwidth.

According to yet another embodiment of the present invention a signal processing unit 20, 20' of the monitoring device 10, 10' is set to process the image sensor signal using a first contrast in order to generate the first image stream of subsequent video frames. Furthermore, a signal processing unit 20, 20' of the monitoring device 10, 10' is set to process the image sensor signal using a second contrast in order to generate the second image stream of subsequent video frames. As mentioned above, by using different contrast various details in an image frame may be enhanced. For instance, the contrast of an image frame may be too low to actually identify a person, but a different contrast setting would sacrifice details in shadows and/or highlights. By increasing the contrast the persons face may be distinguishable but whatever happened in the shadows are lost and cannot be retrieved even when post-processing recorded video frames. Thus according to the present invention both a first image stream of subsequent video frames being optimized for identifying a person, i.e. having a high level of contrast as well as a second image stream of subsequent video frames being optimized for showing details in shadows and/or highlights, i.e. having a different contrast as compare to the first image stream of subsequent video frames may be generated displaying the same scene by the means of a single monitoring device.

According to another embodiment of the present invention a signal processing unit 20, 20' of the monitoring device 10, 10' is set to process the image sensor signal using a first gamma correction in order to generate a first image stream of subsequent video frames. Furthermore, the a signal processing unit 20, 20' of the monitoring device 10, 10' is set to process the image sensor signal using a second gamma correction in order to generate a second image stream of subsequent video frames. Thus, the present invention allows generation of both a first and a second image stream of subsequent video frames having different gamma correction; the first and the second image stream of subsequent video frames are depicting the same scene and are captured by means of a single monitoring device. As a non-limiting example, the first image stream of subsequent video frames may be generated having a gamma correction suitable for a first display system whereas the second image stream of subsequent video frames may be generated having a gamma correction suitable for a second display system. The first display system may e.g. be a CRT-based display system whereas the second display system may be a LCD-based display system.

According to yet another embodiment of the present invention a signal processing unit 20, 20' of the monitoring device 10, 10' is set to process the image sensor signal using a first color space conversion in order to generate the first image stream of subsequent video frames. Furthermore, a signal processing unit 20, 20' of the monitoring device 10, 10' is set to process the image sensor signal using a second color space conversion in order to generate the second image stream of subsequent video frames. Thus, the present invention allows generation of both a first and a second image stream of subsequent video frames having different color space; the first and the second image stream of subsequent video frames are depicting the same scene and are captured by means of a single monitoring device. As a non-limiting example, the first image stream of subsequent video frames may be generated having a color space representing PAL whereas the second image stream of subsequent video frames may be generated having a color space representing NTSC. As another non-limiting example first image stream of subsequent video frames may be generated having a color space representing Adobe RGB whereas the second image stream of subsequent video frames may be generated having a color space representing s-RBG.

In case of the embodiment of the monitoring device being depicted in figure 1, after being generated by means of the image signal processing unit 20, the images streams of subsequent image frames generated by the image signal processing unit 20 is transmitted to the scaler 22, the compression unit 24 and the digital network module 26 for further processing before being transmitted over the digital network via the Ethernet interface 28.

In case of the embodiment of the monitoring device being depicted in figure 3, after being generated by means of respective image signal processing unit 20, 20', the images streams of subsequent image frames generated by the image signal processing unit 20, 20' are transmitted to the scaler 22, the compression unit 24 and the digital network module 26 for further processing before being transmitted over the digital network via the Ethernet interface 28.

Common for the two embodiments of figure 1 and 3, the scaler 22 is arranged to transform the video frames into desired frame size. The scaler 22 may moreover be arranged to correct geometrical distortions in the video frames.

Common for the two embodiments of figure 1 and 3, in the compression unit 24 each image stream of subsequent image frames may be compressed. The compressing is normally made according to a predefined standard, such as H.264, M-JPEG or MPEG. Each images stream of subsequent image frames may be compressed specifically. Thus, one images stream of subsequent image frames may be compressed using the H.264 standard whereas another images stream of subsequent image frames may be compressed using another type of compressing, i.e. MPEG. However, it is to be understood that each image stream of subsequent image frames may be compressed using the same compressing scheme. Moreover, it is also to be understood that at least one of the images streams of subsequent video frames may not be compressed.

Common for the two embodiments of figure 1 and 3, the digital network module 24 is arranged to transmit and receive digital signals. Thus, the digital network module 24 is arranged to process and prepare the image streams of subsequent video frames for transmission through the digital network via the Ethernet interface 28.

Common for the two embodiments of figure 1 and 3, the CPU 30 controls the camera functions. The CPU 30 is able to store digital data in the memory 32.

The person skilled in the art realizes that the present invention by no means is limited to the aspect and embodiments described above. For example the image sensor processor 20 may include process steps comprising types of scaling and compression but generally these are carried out when the image streams have been created as most often information is lost in these steps.

Thus, many modifications and variations are possible within the scope of the appended claims.

## Claims

1. Monitoring device for generating a first and a second image stream of subsequent video frames, comprising:
an image sensor unit (16) arranged to capture images and to output an image sensor signal, and
a processing unit (20, 20') arranged to receive and process the image sensor signal, **characterized in that**
the monitoring device is arranged, by means of the image signal processing unit (20, 20'), to process the image sensor signal twice in order to generate the first and the second image streams of subsequent video frames.

2. Monitoring device according to claim 1, wherein the image signal processing unit (20, 20') processing the image sensor signal in order to generate the first image stream of subsequent video frames is set in a first mode and wherein the image signal processing unit (20, 20') processing the image sensor signal in order to generate the second image stream of subsequent video frames is set in a second mode, the second mode being different than the first mode.

3. Monitoring device according to any one of claims 1-2, wherein the monitoring device comprises two separate signal processing units (20, 20'), wherein the first signal processing unit (20) is arranged to process the image sensor signal in order to generate the first image stream of subsequent video frames and the second signal processing units (20') is arranged to process the same image sensor signal as the first signal processing units (20) in order to generate the second image stream of subsequent video frames.

4. Monitoring device according to any one of claims 1-2, wherein the monitoring device comprises a single signal processing unit (20), wherein the single signal processing units (20) is arranged to process the image sensor signal twice in order to generate the first and the second image streams of subsequent video frames.

5. Monitoring device according to any one of the claims 1-4, wherein the image signal processing unit (20, 20') processing the image sensor signal in order to generate the first image stream of subsequent video frames is arranged to process the image sensor signal using a non-linear transfer function and wherein the image signal processing unit (20, 20') processing the image sensor signal in order to generate the second image stream of subsequent video frames is arranged to process the image sensor signal using a linear transfer function.

6. Monitoring device according to any one of the claims 1-5, wherein the image signal processing unit (20, 20') is arranged to generate the first image stream of subsequent video frames as video frames based on image sensor signal collected during a first time period and wherein the image signal processing unit (20, 20') is arranged to generate the second image stream of subsequent video frames as video frames based on image sensor signal collected during a second time period, wherein the second time period is longer than the first time period.

7. Monitoring device according to any one of the claims 1-6, wherein the image signal processing unit (20, 20') processing the image sensor signal in order to generate the first image stream of subsequent video frames is arranged to process the image sensor signal using a first noise reduction level and wherein the image signal processing unit (20, 20') processing the image sensor signal in order to generate the second image stream of subsequent video frames is arranged to process the image sensor signal using a second noise reduction level, wherein the second noise reduction level is different than the first noise reduction level.

8. Monitoring device according to any one of the claims 1-7, wherein the image signal processing unit (20, 20') processing the image sensor signal in order to generate the first image stream of subsequent video frames is arranged to process the image sensor signal using a first contrast setting and wherein the image signal processing unit (20, 20') processing the image sensor signal in order to generate the second image stream of subsequent video frames is arranged to process the image sensor signal using a second contrast setting.

9. Monitoring device according to any one of the claims 1-8, wherein the image signal processing unit (20, 20') processing the image sensor signal in order to generate the first image stream of subsequent video frames is arranged to process the image sensor signal using a first gamma correction and wherein the image signal processing unit (20, 20') processing the image sensor signal in order to generate the second image stream of subsequent video frames is arranged to process the image sensor signal using a second gamma correction.

10. Monitoring device according to any one of the claims 1-9, wherein the image signal processing unit (20, 20') processing the image sensor signal in order to generate the first image stream of subsequent video frames is arranged to process the image sensor signal using a first color space conversion and wherein the image signal processing unit (20, 20') processing the image sensor signal in order to generate the second image stream of subsequent video frames is arranged to process the image sensor signal using a second color space conversion.

11. Method for generating a first and a second image stream of subsequent video frames, comprising the acts:
capturing an image sensor signal,
generating a first image stream of subsequent video frames by processing the image sensor signal a first time, and
generating a second image stream of subsequent video frames by processing the image sensor signal a second time.

12. Method according to claim 11, wherein generating the first image stream of subsequent video frames by processing the image sensor signal a first time and generating the second image stream of subsequent video frames by processing the image sensor signal a second time is performed in a single processing unit being an image signal processing unit (20).

13. Method according to claim 11, wherein generating the first image stream of subsequent video frames by processing the image sensor signal a first time is performed in a first image signal processing unit (20) and generating the second image stream of subsequent video frames by processing the image sensor signal a second time is performed in a second image signal processing unit (20').

14. Method according to any one of claims 11-13, wherein the acts are performed in a single monitoring device.

15. Method according to any one of claims 11-14, further comprising displaying or storing said first and second image streams of subsequent video frames.
